# EUROPÄISCHE PATENTANMELDUNG

(11) **EP 3 653 475 A1**
(43) Veröffentlichungstag der Anmeldung: **20.05.2020**
(21) Anmeldenummer: 18465619.7
(22) Anmeldetag: 19.11.2018
(51) Int. Cl.: B62J 6/00, B62J 27/00, B62J 99/00

(54) **VERFAHREN ZUM BETRIEB EINES ASSISTENZSYSTEMS EINES ZWEIRADS**

(71) Anmelder: Conti Temic microelectronic GmbH, 90411 Nürnberg (DE)
(72) Erfinder: Amariei, Cornel Marian, 087075 Floresti (RO); Dragan, Andrei, 550036 Sibiu (RO)

(57) **Zusammenfassung**

Die Erfindung betrifft ein Verfahren (2) zum Betrieb eines Assistenzsystems (4) eines Zweirads (6), insbesondere eines Fahrrads. Eine Bewegung (32) eines Fahrers (16) wird berührungslos erkannt, und in Abhängigkeit der Bewegung (32) wird eine Funktion (36) ausgeführt. Die Erfindung betrifft ferner ein Assistenzsystem (4) eines Zweirads (6) sowie eine Zweirad (6).

## Beschreibung

Die Erfindung betrifft ein Verfahren zum Betrieb eines Assistenzsystems eines Zweirads. Das Zweirad ist zweckmäßigerweise ein Fahrrad. Die Erfindung betrifft ferner ein Assistenzsystem eines Zweirads sowie eine Zweirad.

Zweiräder werden in zunehmendem Maße mittels eines Elektromotors zusätzlich angetrieben. Somit können auch vergleichsweise untrainierte Personen mit derartigen Fahrrädern vergleichsweise hohe Geschwindigkeiten erreichen. Hierbei ist es möglich, die Zusatzleistung des Elektromotors einzustellen, wofür ein manueller Regler herangezogen wird. Somit ist es für den Fahrer erforderlich, eine Hand vom Lenker des Fahrrads zu nehmen um den Regler zu betätigen. Sofern der Hebel des Reglers vergleichsweise filigran ausgestaltet ist, muss zunächst überprüft werden, wo sich der Regler befindet. Somit ist die Konzentration des Fahrers nicht auf das Umfeld gerichtet, was zu einem erhöhten Unfallrisiko führt.

Auch nimmt ein Fahrradverkehr zu. Um weiteren Verkehrsteilnehmern eine Richtungsänderung zu signalisieren, beispielsweise ein Abbiegen in eine Seitenstraße, ist es vorgeschrieben, einen sich auf dieser Seite befindenden Arm zu heben. Falls dabei eine vergleichsweise kurzfristige Korrektur der Fahrtrichtung erfolgen muss oder soll, ist es erforderlich, dass erneut der Lenker mit beiden Händen gegriffen wird. Sofern folglich ein weiterer Verkehrsteilnehmern das erste Handzeichen nicht wahrgenommen hat, ist für diesen nicht ersichtlich, dass der Fahrradfahrer in die Seitenstraße einbiegen möchte, was ebenfalls zu einem erhöhten Unfallrisiko führt.

Daher werden beispielsweise bei Fahrrädern ebenfalls Fahrtrichtungsanzeiger herangezogen, wie die bei Motorrädern oder Kleinkrafträdern bereits der Fall ist. Somit ist auch bei einem erneuten Greifen des Lenkers für weitere Verkehrsteilnehmer weiterhin der gewünschte Richtungswechsel erkennbar. Hierbei ist es jedoch, ebenso wie bei dem Regler für den Elektromotor, erforderlich, zunächst den entsprechenden Schalter für den Fahrtrichtungsanzeiger manuell zu betätigen und im Anschluss hieran den Arm zu heben. Während des Betätigens des Schalters für den Fahrtrichtungsanzeiger ist die Aufmerksamkeit meist nicht auf das Umfeld des Fahrrads gerichtet, was zu einem erhöhten Unfallrisiko führt.

Der Erfindung liegt die Aufgabe zugrunde, ein besonders geeignetes Verfahren zum Betrieb eines Assistenzsystems eines Zweirads sowie ein besonders geeignetes Assistenzsystem eines Zweirads und ein besonders geeignetes Zweirad anzugeben, wobei vorteilhafterweise eine Sicherheit und/oder ein Komfort erhöht ist.

Hinsichtlich des Verfahrens wird diese Aufgabe durch die Merkmale des Anspruchs 1, hinsichtlich des Assistenzsystems durch die Merkmale des Anspruchs 6 und hinsichtlich des Zweirads durch die Merkmale des Anspruchs 10 erfindungsgemäß gelöst. Vorteilhafte Weiterbildungen und Ausgestaltungen sind Gegenstand der jeweiligen Unteransprüche.

Das Verfahren dient dem Betrieb eines Assistenzsystems eines Zweirads. Das Zweirad ist beispielsweise ein Motorrad oder ein Kleinkraftrad. Mit anderen Worten weist das Zweirad einen Motor für den Vortrieb auf, wobei insbesondere lediglich der Vortrieb mittels des Motors erfolgt. Der Motor ist beispielsweise ein Elektromotor oder ein Verbrennungsmotor. Insbesondere wird unter Zweirad auch ein "light electric vehicle" verstanden. Besonders bevorzugt jedoch ist das Zweirad ein Fahrrad. Hierbei ist das Fahrrad beispielsweise lediglich mittels Muskelkraft bewegbar. Alternativ hierzu weist das Fahrrad einen Hilfsmotor auf, der beispielsweise als Elektromotor ausgestaltet ist. Mit anderen Worten handelt es sich bei dem Zweirad um ein Elektrofahrrad oder Pedelec. Mittels des Hilfsmotors erfolgt insbesondere lediglich eine Unterstützung einer Muskelbetätigung. Mit anderen Worten ist ein Aufbringen von Muskelkraft stets erforderlich, wobei mittels des Hilfsmotors zusätzlich Leistung auf ein etwaiges Antriebsrad des Fahrrads aufgebracht wird. Unter Zweirad wird insbesondere auch ein Dreirad oder ein Fahrrad mit mehr als drei Rädern, beispielsweise mit vier Rädern, verstanden, wobei stets Muskelkraft zumindest teilweise für den Vortrieb erforderlich ist. Zusammenfassend wird insbesondere unter Zweirad lediglich ein Fahrrad verstanden, wobei dieses beispielsweise den (elektromotorischen) Hilfsmotor aufweist, also insbesondere ein Elektrofahrrad. Sofern ein Aufbringen von Muskelkraft erforderlich ist, erfolgt dies zweckmäßigerweise mittels einer Kurbel, an der vorzugsweise eine Anzahl an Pedalen angeordnet ist. Die Pedale werden im bestimmungsgemäßen zweckmäßigerweise mittels Füßen des Fahrers des Zweirads bewegt.

Das Verfahren sieht vor, dass eine Bewegung des Fahrers berührungslos erkannt wird. Mit anderen Worten ist eine manuelle Betätigung eines Schalters oder dergleichen nicht erforderlich. Zweckmäßigerweise wird die Bewegung in einem bestimmten Raumbereich erkannt, der insbesondere vordefiniert ist. Beispielsweise wird als Bewegung eine Geste des Fahrers herangezogen. In einem sich anschließenden Arbeitsschritt wird in Abhängigkeit der Bewegung eine Funktion ausgeführt.

Aufgrund des Verfahrens ist eine manuelle Betätigung eines Schalters für den Fahrer des Fahrrads nicht erforderlich. Somit ist es für den Fahrer des Zweirads möglich, seine Konzentration im Wesentlichen vollständig auf das Umfeld des Fahrrads zu richten, was eine Sicherheit erhöht. Da hierbei kein Schalter oder dergleichen gesucht werden oder ein Kopf hierfür gesenkt werden muss, ist zudem ein Komfort erhöht.

Aufgrund der berührungslosen Erkennung ist zweckmäßigerweise eine Toleranz vorhanden, sodass die Bewegung nicht stets exakt gleich ausgeführt werden muss. Somit wird eine Anzahl an unterschiedlichen Bewegungen zum Ausführen der Funktion herangezogen, die von einer Referenz abweichen. Mit anderen Worten weisen die einzelnen Bewegungen zueinander und zu der Referenz jeweils eine gewisse Toleranz auf, wobei dennoch die Funktion ausgeführt wird.

Ferner ist es möglich, unterschiedliche Bewegungen jeweils unterschiedlichen Funktionen zuzuordnen. Beispielsweise werden unterschiedliche Bewegungen unterschiedlichen Funktionen zugeordnet. Somit wird beispielsweise einer Bewegung eine erste Funktion und einer weiteren Bewegung eine zweite Funktion zugewiesen. Infolgedessen ist ein Vorsehen einer Vielzahl an Schaltern an dem Zweirad nicht erforderlich, weswegen beispielsweise eine Verwechslung ausgeschlossen ist. Auch ist ein Gewicht des Zweirads verringert, sodass insbesondere ein Kraftaufwand für die Bewegung des Zweirads verringert ist. Geeigneterweise sind mehrere Sensoren vorhanden, sodass unterschiedliche Bewegungen von Körperextremitäten des Fahrers erfasst werden können.

Beispielsweise wird die Bewegung des Fahrers berührungslos erkannt und mit einer in einem Speicher hinterlegt Referenz verglichen. Sofern die Bewegung von der Referenz um weniger als einen Toleranzwert abweicht, ist die Bewegung erkannt und die Funktion wird ausgeführt. Beispielsweise ist die Toleranz und/oder die Referenz konstant. Besonders bevorzugt jedoch werden diese adaptiv angepasst, beispielsweise mittels eines Machine-Learning Algorithmus. Hierfür weist das Assistenzsystem geeigneterweise entsprechende Hardware auf. Alternativ oder in Kombination hierzu ist beispielsweise ein Datenaustausch mit einer zentralen Einheit ermöglicht, insbesondere ein drahtloser Datenaustausch, zum Beispiel mittels WLAN oder einem Mobilfunk-Standard. Bei Betrieb wird vorzugsweise eine Datenverbindung mit der externen Einheit erstellt. Insbesondere wird mittels der externen Einheit der etwaige Machine-Learning Algorithmus durchgeführt. Somit sind ein Energiebedarf und auch Hardwareanforderungen des Assistenzsystems reduziert. Zudem sind Herstellungskosten reduziert.

Beispielsweise wird als Bewegung ein Heben eines Arms des Fahrers herangezogen. Mit anderen Worten wird berührungslos das Heben des Arms des Fahrers erkannt. Zweckmäßigerweise erfolgt eine Zuordnung des Arms zu einer der Seiten des Zweirads. Beispielsweise wird die Funktion so lange ausgeführt, bis das Heben des Arms beendet ist und der Fahrer erneut den Lenker greift. Alternativ hierzu wird die Funktion so lange ausgeführt, bis ein weiteres Ereignis erfolgt, beispielsweise in externes Ereignis, insbesondere eine Fahrtrichtungsänderung. Zweckmäßigerweise wird als Funktion die Betätigung eines Fahrtrichtungsanzeigers herangezogen. Der Fahrtrichtungsanzeiger ist zweckmäßigerweise ein Bestandteil des Assistenzsystems oder zumindest des Zweirads. Hierfür weist das Assistenzsystem geeigneterweise eine Schnittstelle auf, beispielsweise einen Stecker. Vorzugsweise erfolgt bei Ausführen der Funktion eine Bestromung des Fahrtrichtungsanzeigers. Geeigneterweise wird diese periodisch angesteuert. Vorzugsweise wird derjenige Fahrtrichtungsanzeiger betätigt, der sich auf der Seite des Zweirads befindet, auf der der Arm des Fahrers gehoben wird oder wurde. Somit ist bei einer gewünschten Fahrtrichtungsänderung für den Fahrer lediglich erforderlich, den Arm entsprechend zu heben, wobei der Fahrtrichtungsanzeiger aufgrund des Assistenzsystems betätigt wird. Somit ist auch für weitere Verkehrsteilnehmer der gewünschte Fahrtrichtungsänderung ersichtlich, insbesondere bei vergleichsweise schlechten Sichtverhältnissen, wie bei Dunkelheit. Somit ist für den Fahrer des Zweirads eine Sicherheit erhöht. Vorzugsweise sind hierbei zumindest zwei Sensoren vorhanden, von denen jeweils einer einer der Seiten des Zweirads zugeordnet ist.

Alternativ oder in Kombination hierzu wird als Funktion die Betätigung eines Notrufassistenten herangezogen. Hierbei wird beispielsweise ein Notruf abgesetzt, geeigneterweise mittels eines Mobilfunk-Standards, wie GSM, 3G, UMTS oder 5G. Beispielsweise erfolgt zunächst eine Abfrage eines Status des Fahrers oder der Notruf wird eine bestimmte Zeitspanne nach Erkennen der Bewegung abgesetzt, beispielsweise 10 Sekunden. Mittels des Notrufassistenten wird beispielsweise automatisch der Notruf abgesetzt, wobei insbesondere eine Position des Zweirads übermittelt wird. Die Position ist zweckmäßigerweise mittels eines GPS-Empfängers bestimmt, der zum Beispiel ein Bestandteil des Assistenzsystems oder zumindest des Zweirads ist. Alternativ hierzu wird beispielsweise eine Sprachverbindung zu einer Notrufzentrale aufgebaut, sodass der Fahrer des Zweirads selbst den etwaigen Unfall mitteilen kann. Als Bewegung wird geeigneterweise eine vergleichsweise unkontrollierte Bewegung des Fahrers herangezogen, insbesondere ein unkontrolliertes Bewegen der Arme und/oder des Kopfes. Auch werden beispielsweise ein vergleichsweise schnelles Verlassen eines Sattels/Sitzes und/oder das Verlassen des Sattels/Sitzes in eine nicht vorbestimmte Richtung, die insbesondere seitlich ist, als Bewegung herangezogen, die zur Betätigung des Notrufassistenten führt.

Alternativ oder besonders bevorzugt in Kombination hierzu wird als Bewegung ein zeitlicher Ablauf des Hebens eines Beins des Fahrers herangezogen. Mit anderen Worten werden die Trittgeschwindigkeit und/oder die Kadenz als Bewegung berührungslos erkannt. Als Funktion wird dabei zweckmäßigerweise eine Änderung einer Leistungsanforderung eines Hilfsmotors herangezogen. Mit anderen Worten wird die Leistung des Hilfsmotors auf die Trittgeschwindigkeit angepasst. Der Hilfsmotor ist zweckmäßigerweise ein Elektromotor, sodass in Abhängigkeit der Kadenz die Bestromung des Elektromotors verändert wird. Hierbei handelt es sich bei dem Zweirad geeigneterweise um ein Elektrofahrrad oder Pedelec. Mit anderen Worten erfolgt die Bestimmung der Tretunterstützung berührungslos. Somit ist es für den Fahrer nicht erforderlich, manuell einen Regler zu betätigen, weswegen dessen Aufmerksamkeit auf das Umfeld des Zweirads gerichtet werden kann. Somit ist eine Sicherheit erhöht. Auch erfolgt im Wesentlichen eine direkte Reaktion auf das (veränderte) Heben des Beins des Fahrers, sodass beispielsweise bei einem Berganstieg automatisch eine Leistungsanforderung erhöht wird. Folglich wird im Wesentlichen unverzüglich eine zusätzlich Leistung des Hilfsmotors abgerufen, was einen Komfort erhöht.

Alternativ oder in Kombination hierzu wird beispielsweise als Funktion eine Bedienung eines Navigationsgeräts herangezogen. Das Navigationsgerät ist beispielsweise ein Bestandteil des Assistenzsystems oder das Assistenzsystem weist eine Schnittstelle hierfür auf. Als Funktion wird geeigneterweise auf einem Display ein bestimmter Kartenabschnitt in Abhängigkeit der Bewegung verschoben und/oder vergrößert/verkleinert. Aufgrund der berührungslosen Bedienung ist insbesondere bei einer vergleichsweise unebenen Strecke eine sichere Bedienung des Navigationsgeräts ermöglicht, sodass Fehleingaben vermieden sind. Insbesondere wird als Bewegung eine Wischgeste oder sonstige Geste des Fahrers herangezogen, die dieser mittels einer Hand durchführen kann.

Das Assistenzsystem ist ein Bestandteil eines Zweirads. Das Zweirad ist geeigneterweise ein Fahrrad, wobei das Fahrrad insbesondere lediglich mittels Muskelkraft betrieben ist. Alternativ hierzu ist das Fahrrad mittels eines Hilfsmotors ausgerüstet, der zweckmäßigerweise ein Elektromotor ist. Das Assistenzsystem umfasst ein Steuergerät, das beispielsweise einen programmierbaren Speicher und/oder Mikrochip umfasst. Alternativ hierzu ist das Steuergerät insbesondere mittels eines anwenderspezifischen Schaltkreis (ASIC) realisiert. Das Assistenzsystem ist gemäß einem Verfahren betrieben, bei dem eine Bewegung eines Fahrers berührungslos erkannt wird, und in Abhängigkeit der Bewegung eine Funktion ausgeführt wird. Die Bewegung ist zweckmäßigerweise eine Geste des Fahrers, also insbesondere eine kontrollierte Bewegung, die zum Beispiel mehrmals wiederholt wird. Das Steuergerät ist geeignet, insbesondere vorgesehen und eingerichtet, das Verfahren durchzuführen.

Das Steuergerät umfasst zweckmäßigerweise eine Anzahl an Schnittstellen, mittels derer beispielsweise eine entsprechende Anweisung zum Durchführen der Funktion ausgegeben wird. Alternativ hierzu ist die Funktion in dem Steuergerät hinterlegt. Insbesondere weist das Assistenzsystem einen Notrufassistenten und/oder ein Navigationsgeräts auf. Insbesondere umfasst das Assistenzsystem eine Kommunikationsvorrichtung, die zum Beispiel gemäß einem WLAN-Standard oder einem Mobilfunk-Standard ausgebildet ist. Hierbei erfolgt zum Beispiel eine Aktualisierung etwaiger Kartendaten mittels der Kommunikationsschnittstelle und/oder ein Absetzen eines Notrufes, sofern dies erforderlich ist. Insbesondere wird hierbei als Funktion die Betätigung des Notrufassistenten bzw. Bedienung des Navigationsgeräts herangezogen. Mittels der Kommunikationsvorrichtung ist es zudem möglich, eine Datenverbindung zu erstellen, insbesondere zu einer externen Einheit. Geeigneterweise erfolgt mittels der Kommunikationsvorrichtung ein Datenaustausch, der zweckmäßigerweise für ein Machine-Learning herangezogen wird.

Geeigneterweise weist das Assistenzsystem eine Schnittstelle für einen Hilfsmotor oder zumindest für eine Ansteuerschaltung des Hilfsmotors auf, zweckmäßigerweise sofern das Zweirad als Elektrofahrrad ausgestaltet ist. Beispielweise umfasst das Assistenzsystem einen Energiespeicher, wie eine Batterie, die zweckmäßigerweise wieder aufladbar ausgestaltet ist. Alternativ hierzu erfolgt bei Betrieb beispielsweise eine Bestromung des Assistenzsystems mittels eines Dynamos oder eines etwaigen Energiespeichers des Zweirads, insbesondere sofern das Zweirad als Elektrofahrrad ausgestaltet ist.

Beispielsweise weist das Assistenzsystem eine Schnittstelle für einen Sensor auf, mittels dessen bei Betrieb die Bewegung des Fahrers berührungslos erkannt wird. Geeigneterweise jedoch umfasst das Assistenzsystem den Sensor. Der Sensor ist vorzugsweise im Einbauzustand auf einen bestimmten Raumbereich um das Zweirad gerichtet. Geeigneterweise ist der Erfassungsbereich des Sensors auf beide Seiten des Zweirads, sodass ein Heben sowohl eines linken als auch eines rechten Arms des Fahrers erkannt werden kann. Somit ist insbesondere dann, wenn das Heben des Arms des Fahrers als Bewegung herangezogen wird, eine Zuordnung zu einem jeweiligen Fahrtrichtungsanzeiger ermöglicht.

Beispielsweise weist der Sensor lediglich ein Erfassungsbereich auf. Hierbei wird insbesondere lediglich eine der Anwesenheit eines Objekts in dem Erfassungsbereich als Bewegung erkannt. Geeigneterweise jedoch umfasst der Sensor mehrere Erfassungssegmente, mittels derer der Erfassungsbereich gebildet ist. Mit anderen Worten weist der Sensor als Multizone- oder Multibeam-Sensor ausgestaltet. Die Erfassungssegmente sind zweckmäßigerweise zueinander benachbart. Mittels Auswertung der Sensordaten ist es somit möglich, zu bestimmen, in welchem der Erfassungsbereiche zuerst ein Objekt oder dergleichen, wie des Arms oder Beins des Fahrers, vorhanden ist. Somit sind ein zeitlicher Verlauf der Position des Arms bzw. des Beins und somit auch die Bewegungsrichtung bestimmbar. Folglich ist es möglich, unterschiedliche Bewegungen zu definieren und diesen unterschiedliche Funktionen zuzuweisen, insbesondere Abhängigkeit der Bewegungsrichtung. Zudem ist eine Zuverlässigkeit des Erkennens der Bewegung erhöht.

Beispielsweise ist der Sensor ein Ultraschallsensor oder ein Mikrowellensensor. Bei Betrieb werden insbesondere Ultraschallwellen oder elektromagnetische Wellen ausgesandt und an bestimmten Teilen des Fahrers, wie dem Arm oder dem Bein, reflektiert und/oder gestreut. Die reflektierten/gestreuten Wellen werden mittels des Sensors erfasst. Anhand einer Laufzeitverschiebung und/oder eine Zeitspanne zwischen Aussenden und Empfangen der Wellen wird insbesondere ein Abstand bestimmt. Anhand des zeitlichen Verlaufs des Abstands wird geeigneterweise die Bewegung erkannt. So ist ein vergleichsweise sicheres Erkennen der Bewegung ermöglicht. In einer weiteren Alternative ist der Sensor beispielsweise ein kapazitiver Sensor.

Besonders bevorzugt jedoch wird als Sensor ein optischer Sensor herangezogen. Mit anderen Worten wird die Bewegung optisch erfasst. Der optische Sensor ist zweckmäßigerweise eine Kamera, die beispielsweise im sichtbaren und/oder infraroten Spektralbereich sensitiv ist. Mittels Auswerten der einzelnen mittels des optischen Sensors erstellten Bilder erfolgt ein Erkennen der Bewegung. Infolgedessen ist auch ein Erkennen einer vergleichsweise komplexen Bewegung ermöglicht, und es ist möglich, unterschiedliche Bewegungen zu erkennen, wobei die einzelnen Bewegungen unterschiedliche Funktion zugewiesen sind.

Das Zweirad weist ein Assistenzsystem mit einem Steuergerät und einem Sensor zum berührungslosen Erfassen der Bewegung des Fahrers auf. Das Assistenzsystem ist gemäß einem Verfahren betrieben, bei dem eine Bewegung des Fahrers berührungslos erkannt wird, insbesondere mittels des Sensors. In Abhängigkeit der Bewegung wird eine Funktion ausgeführt. Vorzugsweise umfasst das Zweirad einen Rahmen, der beispielsweise als Diamantrahmen ausgestaltet ist. Somit ist eine Robustheit des Zweirads erhöht.

Der Sensor ist vorzugsweise an dem Rahmen angebunden, insbesondere befestigt. Geeigneterweise ist hierbei der Sensor an einem Oberrohr angebunden. Somit ist ein vergleichsweise sicheres Erfassen eines Oberkörpers des Fahrers und insbesondere von dessen Armen ermöglicht. In einer weiteren Alternative hierzu ist der Sensor an einem Sitzrohr des Rahmens angebunden. Somit ist mittels des Sensors auch ein Erfassen einer Bewegung von Beinen des Fahrers ermöglicht. Zusätzlich ist hierbei auch zumindest teilweise ein Erfassen der Bewegung des Oberkörpers und /oder der Arme des Fahrers ermöglicht.

In einer weiteren Alternative ist der Sensor an einem Lenker des Zweirads angebunden. Somit ist es möglich, den Oberkörper des Fahrers vergleichsweise sicher zu erfassen und/oder eine Bewegung dessen Arme und/oder Hand. In einer weiteren Alternative hierzu ist der Sensor an einer Hinterradnabe angebunden, beispielsweise an einem dort angeordneten Hilfsmotor/Elektromotor. Somit ist es möglich, den Hilfsmotor und den Sensors als eine Einheit zu montieren, was eine Herstellung vereinfacht. Beispielsweise ist der Sensor in dem gleichen Gehäuses wie der Hilfsmotor angeordnet, was eine Robustheit erhöht. Auch ist bei einer derartigen Positionierung des Sensors eine Erfassung einer Armbewegung und/oder Beinbewegung des Fahrers vergleichsweise sicher möglich.

Die im Zusammenhang mit dem Verfahren beschriebenen Vorteile und Weiterbildungen sind sinngemäß auch auf das Assistenzsystem/ Zweirad zu übertragen und umgekehrt.

Nachfolgend werden Ausführungsbeispiele der Erfindung anhand einer Zeichnung näher erläutert. Darin zeigen:
- Fig. 1: Verfahren zum Betrieb eines Assistenzsystems eines Zweirads,
- Fig. 2: schematisch vereinfacht das Zweirad in einer Rückansicht,
- Fig. 3: eine alternative Ausführungsform des Zweirads in einer Seitenansicht,
- Fig. 4: eine weitere alternative Ausführungsform des Zweirads gemäß Fig. 3,
- Fig. 5: eine weitere alternative Ausführungsform des Zweirads gemäß Fig. 3, und
- Fig. 6: eine weitere alternative Ausführungsform des Zweirads in einer Frontalansicht.

Einander entsprechende Teile sind in allen Figuren mit den gleichen Bezugszeichen versehen.

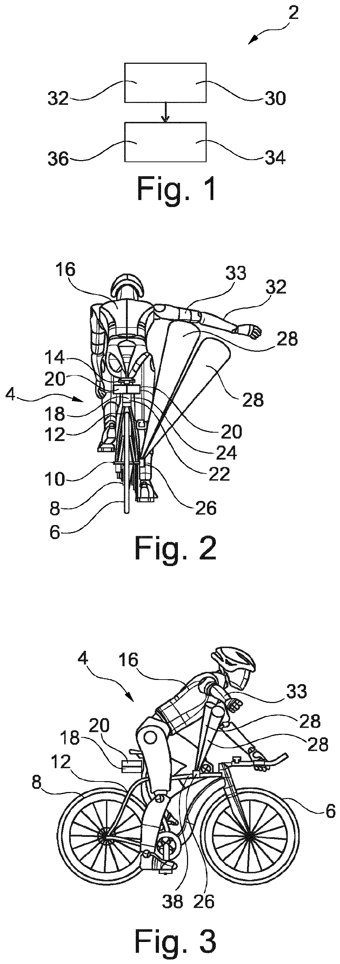

In Figur 1 ist schematisch vereinfacht ein Verfahren 2 zum Betrieb eines Assistenzsystems 4 eines in Figur 2 in einer Rückansicht gezeigten Zweirads 6 dargestellt. Das Zweirad 6 ist ein Fahrrad, das ein Hinterrad 8 aufweist, das mittels einer Hinterradnabe 10 an einem Rahmen 12 drehbar gelagert ist. Zudem weist das Zweirad 6 einen Sattel 14 auf, auf dem ein Fahrer 16 sitzt.

Das Assistenzsystem 4 umfasst ein Steuergerät 18 sowie zwei Fahrtrichtungsanzeiger 20, die als Einheit montiert sind. In dem Steuergerät 18 ist eine Kommunikationsvorrichtung 22 sowie eine Notrufassistenten 24 integriert. Die Kommunikationsvorrichtung 22 ist teilweise mittels des Notrufassistenten 24 gesteuert, sodass mittels dieser im Bedarfsfall ein Notruf abgesetzt werden kann.

Ferner weist das Assistenzsystem 4 zwei Sensoren 26 auf, die als optische Sensoren, nämlich als Kamera ausgestaltet sind, und von denen lediglich einer dargestellt ist. Die Sensoren 26 sind beidseits an der Hinterradnabe 10 montiert und weisen jeweils zwei Erfassungssegmente 28 auf, die in vertikaler Richtung nach oben auf den Fahrer 16 gerichtet sind.

Das Verfahren sieht vor, dass in einem ersten Arbeitsschritt 30 mittels der Sensoren 26 eine Bewegung 32 des Fahrers 16 berührungslos erfasst wird. Als die Bewegung 32 wird ein Heben eines Arms 33 des Fahrers 16 herangezogen. Hierbei durchläuft der Arm 33 sukzessive die beiden Erfassungssegmente 28 des Sensors 26, der derselben Seite des Zweirads 6 zugeordnet ist.

In einem sich anschließenden zweiten Arbeitsschritt 34 wird in Abhängigkeit der Bewegung 32 eine Funktion 36 ausgeführt. Als Funktion 36 wird die Betätigung eines der Fahrtrichtungsanzeiger 20 betätigt, nämlich des Fahrtrichtungsanzeiger 20, der der gleichen Seite des Zweirads 6 zugeordnet ist, auf der der Arm 33 gehoben wurde. Hierbei wird der Fahrtrichtungsanzeiger 20 solange betätigt, solange entweder der Arm 33 gehoben ist oder bis mittels des Zweirads 6 eine Fahrtrichtungsänderung durchgeführt wurde. Mittels des Steuergeräts 18 werden hierfür die Sensordaten der Sensoren 26 ausgewertet sowie die Fahrtrichtungsanzeiger 20 entsprechend angesteuert.

In Figur 3 ist eine Abwandlung des Zweirads 6 in einer Seitenansicht dargestellt. Im Unterschied zur vorhergehenden Ausgestaltungsform ist lediglich der Sensor 26 abgewandelt und an einem Oberrohr 38 des Rahmens 12 befestigt. Zudem ist lediglich ein einziger Sensor 26 vorhanden, der insgesamt vier Erfassungssegmente 28 aufweist, von denen jeweils zwei jeder der Seiten des Zweirads 6 zugeordnet sind. Hierbei wird ebenfalls ein Heben des Arms 33 als Bewegung 32 erkannt, und in Abhängigkeit hiervon der Fahrtrichtungsanzeiger 20 betätigt.

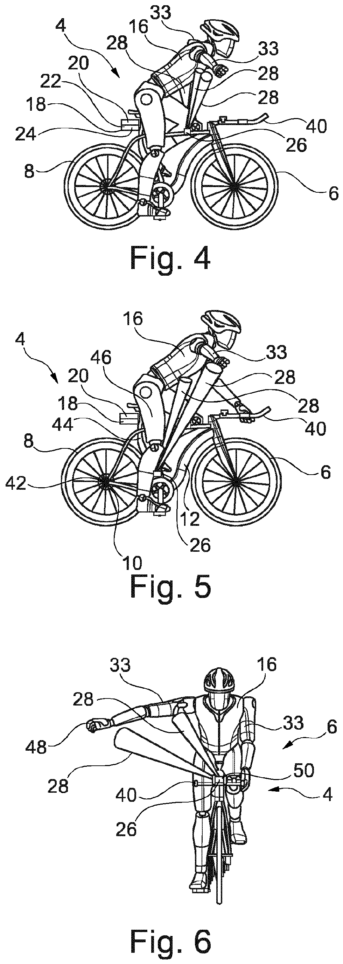

In Figur 4 ist eine Abwandlung des Assistenzsystems 4 dargestellt, das in Figur 3 gezeigt ist. Hierbei ist eine zusätzliche Funktion 36 vorhanden, und es wird eine zusätzliche Bewegung 32 des Fahrers 16 berührungslos erkannt. Sofern lediglich einer der Arme 33 gehoben wird, wird, wie in Figur 3 dargestellt, lediglich einer der Fahrtrichtungsanzeiger 20 betätigt. Falls beide Arme 33 gehoben werden und somit von einem Lenker 40 beabstandet werden, wird dies mittels des Sensors 26 ebenfalls als Bewegung 32 erkannt. Beispielsweise in Panik oder vor einem Auftreffen auf einem Objekt löst der Fahrer 16 die Hände von dem Lenker 40, was mittels der Sensoren 26 erkannt wird. Daher wird als Funktion 36 die Betätigung des Notrufassistenten 24 herangezogen. Mittels des Notrufassistenten 24 wird die Kommunikationsvorrichtung 22 entsprechend angesteuert, sodass ein Notruf zu einer Notrufzentrale abgesetzt wird. Dabei wird zusätzlich die Position des Zweirads 6 übermittelt, die mittels nicht näher dargestellten GPS-Sensors ermittelt wird.

In Figur 5 ist gemäß Figur 4 eine weitere alternative Ausgestaltungsform des Zweirads 6 gezeigt. An der Hinterradnabe 10 ist ein Hilfsmotor 42 in Form eines Elektromotors angebunden, der mittels eines nicht näher dargestellten Energiespeichers bestromt wird. Der Hilfsmotor 42 ist in Wirkverbindung mit dem Hinterrad 8, das somit mittels des Hilfsmotors 42 angetrieben ist. Das Assistenzsystem 4 weist wiederum zwei Sensoren 26 auf, die an einem Sitzrohr 44 des Rahmens 12 befestigt sind, und die jeweils wiederum zwei Erfassungssegmente 28 aufweisen, die vertikal nach oben auf den Fahrer 8 16 gerichtet sind. Hierbei ist es wiederum möglich, das Heben der Arme 33 zu erfassen und als Funktion 36 den jeweiligen Fahrtrichtungsanzeiger 20 zu betätigen. Ferner wird mittels der Sensoren 26 ein zeitlicher Verlauf eines Hebens eines Beins 46 des Fahrers 16 als Bewegung 32 erkannt. Mit anderen Worten wird die Trittgeschwindigkeit des Fahrers 16 mittels der Sensoren 26 erfasst. In Abhängigkeit des zeitlichen Verlaufs des Hebens des Beins 46 wird eine Leistung des Hilfsmotors 42 angepasst. Mit anderen Worten wird als Funktion 36 die Änderung der Leistungsanforderung des Hilfsmotors 42 herangezogen. Sofern der Fahrer 16 somit mit geringerer Geschwindigkeit tritt, beispielsweise aufgrund eines Berganstiegs, wird zweckmäßigerweise die Leistung des Hilfsmotors 42 erhöht, weswegen die Geschwindigkeit des Zweirads 6 im Wesentlichen konstant bleibt.

In Figur 6 ist eine weitere Ausgestaltungsform des Zweirads 6 sowie des Assistenzsystems 4 dargestellt. Der Sensor 26 ist an dem Lenker 40 angebunden und weist entgegen der Fahrtrichtung, sodass wiederum das Heben der Arme 33 mittels der insgesamt vier Erfassungssegmente 28 des Sensors 26 erfasst werden kann, von denen lediglich zwei gezeigt sind. Als Funktion 36 wird wiederum das Betätigen der Fahrtrichtungsanzeiger 20 entsprechend des jeweiligen Arms 33 herangezogen. Zudem ist es möglich, mittels des Sensors 26 eine Wischgeste einer Hand 48 des Fahrers 16 zu erkennen und als Bewegung 32 heranzuziehen. In Abhängigkeit der Wischgeste wird eine Einstellung eines Navigationsgeräts 50 verändert, in dem der Sensor 26 integriert ist, und das an dem Lenker 40 angebunden ist. Hierbei wird insbesondere eine Darstellung einer Karte verändert. Zusammenfassend wird als Funktion 36 die Bedienung des Navigationsgeräts 50 herangezogen, und der Sensor 26 ist an dem Lenker 40 befestigt.

Zusammenfassend wird aufgrund des Verfahrens 2 die Bewegung 32 des Fahrers 16 erfasst. Hierbei wird insbesondere der Fahrtrichtungsanzeiger 20 betätigt, wenn die Bewegung 32 mittels des Arms 33 durchgeführt wird, mittels dessen somit eine Richtungsänderung signalisiert werden soll. Die Sensoren 26 sind beispielsweise an dem Lenker 40, an dem Rahmen 12 oder an der Hinterradnabe 10 angebunden. Die Sensoren 26 sind beispielsweise optische Ultraschall- oder Mikrowellensensoren. Als Funktion 36 wird alternativ oder in Kombination eine Einstellung des Navigationssystems 50 verändert, insbesondere eine 3-D Einstellung einer Karte. Auch ist es möglich, in einem Notfall den Notrufassistenten 24 zu betätigen. Der Notrufassistent 24 nutzt zweckmäßigerweise eine V2X-Infrastruktur ("Vehikel to X"). Auch ist es möglich, als Funktion 36 einen Assistenzlevel zu verändern, insbesondere des Hilfsmotors 42.

Zweckmäßigerweise wird zusätzlich eine Bewegung des Kopfes des Fahrers 16 erfasst, insbesondere sofern der Sensor 26 an dem Oberrohr 38 befestigt ist. Die Erfassung der Bewegung 32 erfolgt insbesondere mittels Auswertung der Reihenfolge, in der der Arm 33 die Erfassungssegmente 28 durchläuft. Beispielsweise ist die Reihenfolge als Referenz fest vorgegeben oder wird bei Montage ermittelt, sodass für jeden Fahrer 16 eine unterschiedliche Referenz herangezogen wird. Beispielsweise erfolgt zusätzlich eine Verwendung eines Machine-Learn Algorithmus, sodass die Bewegung 32 effizient erkannt werden kann. Das Machine-Learning erfolgt beispielsweise mittels des Steuergeräts 18 oder einer externen Einheit, wofür die Kommunikationsvorrichtung 22 zweckmäßigerweise herangezogen wird.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebenen Einzelmerkmale auch auf andere Weise miteinander kombinierbar, ohne den Gegenstand der Erfindung zu verlassen.

### Bezugszeichenliste

- 2: Verfahren
- 4: Assistenzsystem
- 6: Zweirad
- 8: Hinterrad
- 10: Hinterradnabe
- 12: Rahmen
- 14: Sattel
- 16: Fahrer
- 18: Steuergerät
- 20: Fahrtrichtungsanzeiger
- 22: Kommunikationsvorrichtung
- 24: Notrufassistent
- 26: Sensor
- 28: Erfassungssegment
- 30: erster Arbeitsschritt
- 32: Bewegung
- 33: Arm
- 34: zweiter Arbeitsschritt
- 36: Funktion
- 38: Oberrohr
- 40: Lenker
- 42: Hilfsmotor
- 44: Sitzrohr
- 46: Bein
- 48: Hand
- 50: Navigationsgerät

## Patentansprüche

1. Verfahren (2) zum Betrieb eines Assistenzsystems (4) eines Zweirads (6), insbesondere eines Fahrrads, bei dem
- eine Bewegung (32) eines Fahrers (16) berührungslos erkannt wird, und
- in Abhängigkeit der Bewegung (32) eine Funktion (36) ausgeführt wird.

2. Verfahren (2) nach Anspruch 1, **dadurch gekennzeichnet, dass** als Bewegung (32) ein Heben eines Arms (33) des Fahrers (16) und als Funktion (36) die Betätigung eines Fahrtrichtungsanzeigers (20) herangezogen wird.

3. Verfahren (2) nach Anspruch 1 oder 2, **dadurch gekennzeichnet, dass** als Funktion (36) die Betätigung eines Notrufassistenten (24) herangezogen wird.

4. Verfahren (2) nach einem der Ansprüche 1 bis 3, **dadurch gekennzeichnet, dass** als Bewegung (32) ein zeitlicher Ablauf des Hebens eines Beins (46) des Fahrers (16) und als Funktion (36) eine Änderung einer Leistungsanforderung eines Hilfsmotors (42) herangezogen wird.

5. Verfahren (2) nach einem der Ansprüche 1 bis 4, **dadurch gekennzeichnet, dass** als Funktion (36) eine Bedienung eines Navigationsgeräts (50) herangezogen wird.

6. Assistenzsystem (4) eines Zweirads (6), welches ein Steuergerät (18) aufweist, und welches gemäß einem Verfahren (2) nach einem der Ansprüche 1 bis 5 betrieben ist.

7. Assistenzsystem (4) nach Anspruch 6, **gekennzeichnet durch** einen Sensor (26) zum berührungslosen Erfassen der Bewegung (32) des Fahrers (16).

8. Assistenzsystem (4) nach Anspruch 7, **dadurch gekennzeichnet, dass** der Sensor (26) mehrere Erfassungssegmente (28) aufweist.

9. Assistenzsystem (4) nach Anspruch 7 oder 8, **gekennzeichnet durch** einen optischen Sensor (24).

10. Zweirad (6) mit einem Assistenzsystem nach einem der Ansprüche 7 bis 9, wobei der Sensor (26) an einem Oberrohr (38) oder an einem Sitzrohr (44) eines Rahmens (12), an einem Lenker (40) oder an einer Hinterradnabe (10) angebunden ist.
